# EUROPEAN PATENT APPLICATION

(11) **EP 4 796 357 A1**
(43) Date of publication of application: **26.08.2026**
(21) Application number: 26154755.8
(22) Date of filing: 28.01.2026
(51) Int. Cl.: B60K 1/00

(54) **ELECTRIC VEHICLE**

(30) Priority: 19.02.2025 JP 2025024711
(71) Applicant: Toyota Jidosha Kabushiki Kaisha, Toyota-shi, Aichi-ken 471-8571 (JP)
(72) Inventor: FUKUDA, Taiyo, TOYOTA-SHI, AICHI-KEN, 471-8571 (JP); KOIKE, Ryota, TOYOTA-SHI, AICHI-KEN, 471-8571 (JP)
(74) Representative: Cabinet Beau de Loménie

(57) **Abstract**

An electric vehicle (10) includes two thermal modules (18, 19), a refrigerant module (19) configured to distribute an air-conditioning refrigerant and a coolant module (18) configured to distribute a coolant, installed in front of an electric drive unit (15) inside a front compartment (13). Two high-voltage units (20, 21), including a power distribution unit (20) and an on-board charging unit (21), are stacked one above another and arranged above the electric drive unit (15) so that the power distribution unit (20) connected to the electric drive unit (15) by a cable (23) having a larger diameter is located at a lower position than the on-board charging unit (21) connected to the electric drive unit (15) by a cable (24) having a smaller diameter.

## Description

### BACKGROUND

### 1. Field

The following description relates to an electric vehicle.

### 2. Description of Related Art

An electric vehicle may include an electric drive unit that integrates a traction motor with gears. JP2023-124124 discloses an electric vehicle including a high-voltage unit located above the electric drive unit.

When there are multiple high-voltage units above the electric drive unit, a relatively large number of cables are used for connection to the units. Further, devices other than the high-voltage units are arranged around the electric drive unit. Thus, the numerous cables must be routed in the limited space around the electric drive unit.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, an electric vehicle includes a high-voltage battery, an electric drive unit configured to generate driving force for propelling the electric vehicle from electric power supplied by the high-voltage battery, high-voltage units electrically connected to the electric drive unit, and a thermal module configured to distribute a heat-carrying medium. The electric drive unit, the high-voltage units, and the thermal module are installed inside a front compartment that is located in a front part of the electric vehicle. The high-voltage units are stacked one above another and arranged above the electric drive unit so that a high-voltage unit connected to the electric drive unit by a cable having a larger diameter is located at a lower position than a high-voltage unit connected to the electric drive unit by a cable having a smaller diameter.

Other features and aspects will be apparent from the following detailed description, the drawings, and the claims.

### BRIEF DESCRIPTION OF THE DRAWINGS

Fig. 1 is a schematic diagram illustrating the layout of an electric vehicle in accordance with one embodiment as viewed from above.
Fig. 2 is a schematic diagram illustrating the layout in a front compartment as viewed from the left side of the electric vehicle shown in Fig. 1.
Fig. 3 is a schematic diagram illustrating the layout of a front compartment in the electric vehicle shown in Fig. 1 as viewed from above.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

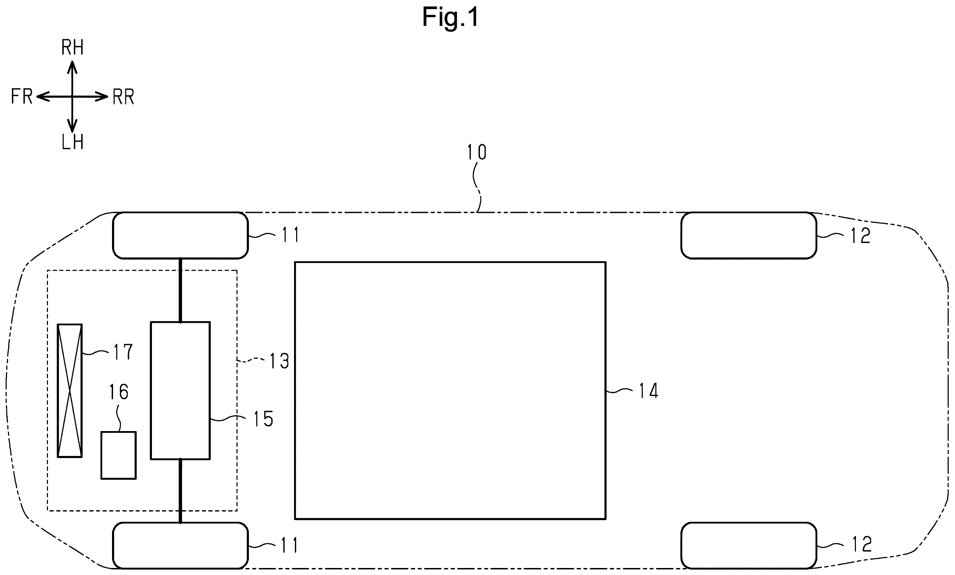

One embodiment of an electric vehicle will now be described with reference to Figs. 1 to 3. In the drawings, "FR," "RR," "RH," "LH," "UP," and "DW" respectively indicate the front, rear, right, left, upward, and downward directions, with reference to the forward traveling direction of the vehicle.

### Electric Vehicle

Fig. 1 shows an electric vehicle 10 in accordance with the present embodiment that includes four wheels, namely, left and right front wheels 11 and left and right rear wheels 12. The electric vehicle 10 is of a front-wheel drive type that drives the left and right front wheels 11 to travel. The electric vehicle 10 includes two electrical systems, namely, a high-voltage electrical system and a low-voltage electrical system.

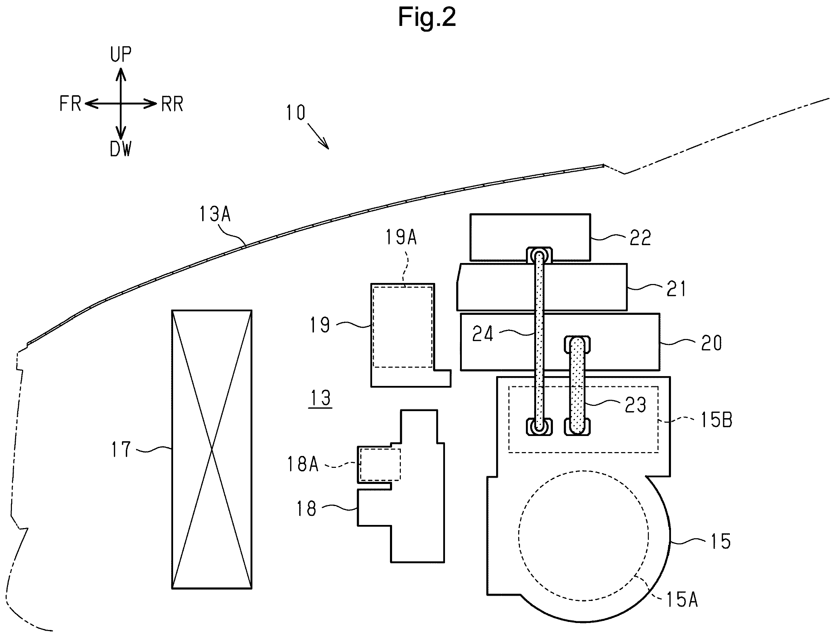

The front part of the electric vehicle 10 includes a front compartment 13. A hood 13A (refer to Fig. 2). which can be opened and closed, covers the upper part of the front compartment 13. The interior of the front compartment 13 is accessible from the upper side by opening the hood 13A. A high-voltage battery 14 in installed in the electric vehicle 10 behind the front compartment 13. The high-voltage battery 14 is installed under the floor and connected to the high-voltage system of the electric vehicle 10. An electric drive unit 15 is installed inside the front compartment 13. The electric drive unit 15 is configured to generate driving force for propelling the electric vehicle 10 from electric power supplied by the high-voltage battery 14. In the electric vehicle 10, the electric drive unit 15 is configured to drive the left and right front wheels 11. The electric drive unit 15 includes at least a motor 15A (refer to Fig. 2) that generates the driving force. The electric drive unit 15 includes the motor 15A, gears of a speed reduction mechanism and a differential mechanism, and an inverter 15B (refer to Fig. 2), which are accommodated in the same case.

Further, a low-voltage battery 16 and a radiator 17 are installed inside the front compartment 13. The low-voltage battery 16 is connected to the low-voltage electrical system of the electric vehicle 10. The radiator 17 is a heat exchanger that exchanges heat with ambient air to cool a coolant. The radiator 17 is installed in the front part of the front compartment 13, where it is cooled by air flowing during travel. The low-voltage battery 16 is located inside the front compartment 13 in front of the electric drive unit 15 and behind the radiator 17.

### Layout of High-Voltage Units and Thermal Modules

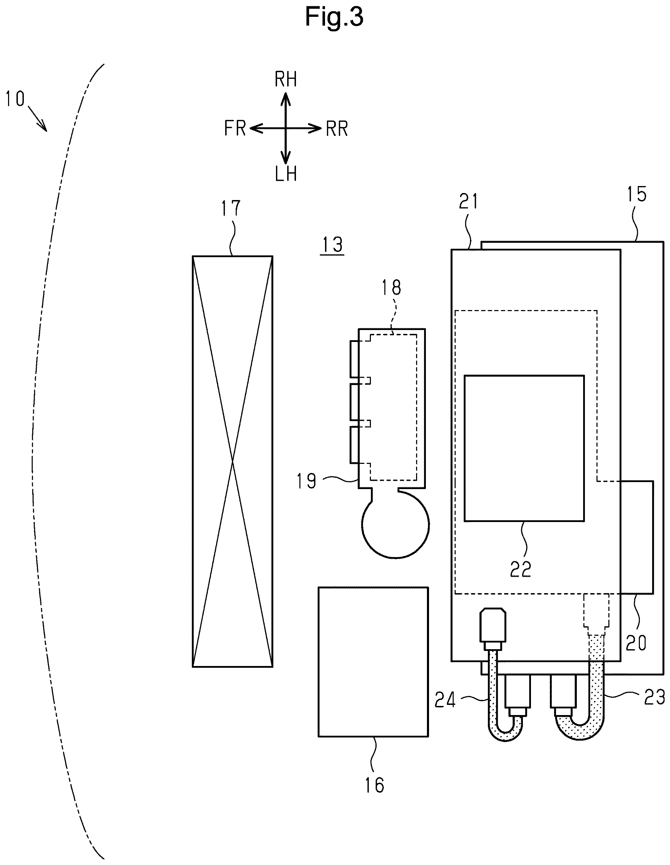

With reference to Figs. 2 and 3, the layout of high-voltage units and thermal modules inside the front compartment 13 of the electric vehicle 10 will now be described. Fig. 2 shows the layout inside the front compartment 13 as viewed from the left side, and Fig. 3 shows the layout inside the front compartment 13 as viewed from the upper side. The high-voltage units are connected to the high-voltage system of the electric vehicle 10. The thermal modules distribute heat-carrying media. The electric vehicle 10 includes two circuits, each for circulating a heat-carrying medium. The two circuits include a coolant circuit that circulates a coolant and a refrigerant circuit that circulates an air conditioning refrigerant. The radiator 17 is connected to the coolant circuit.

The thermal modules of the electric vehicle 10 installed inside the front compartment 13 includes a coolant module 18 that distributes the coolant and a refrigerant module 19 that distributes the refrigerant. The coolant module 18 collectively refers to the parts related to the distribution of coolant to coolant-supplied components. The components to which the coolant module 18 distributes coolant include the radiator 17, the high-voltage battery 14, and the electric drive unit 15. The coolant module 18 includes electric pumps, which deliver coolant to each component, and switch valves, which switch the flow of coolant to the components. The refrigerant module 19 collectively refers to the parts related to the distribution of refrigerant to refrigerant-supplied components. The refrigerant module 19 distributes refrigerant used for air conditioning of the passenger compartment, cooling of the high-voltage battery 14, and the like. The refrigerant module 19 includes expansion valves, which vaporizes liquified refrigerant and delivers the refrigerant to the components. In the electric vehicle 10, the refrigerant module 19 includes a water-cooled condenser 19A, configured to cool the refrigerant by exchanging heat with the coolant supplied from the coolant module 18, and a modulator, which separates the cooled refrigerant into gas and liquid. The coolant module 18 includes an electric pump 18A that delivers coolant to the condenser 19A.

In the electric vehicle 10, the high-voltage units installed in the front compartment 13 include a power distribution unit 20 and an on-board charging unit 21. The power distribution unit 20 is a high-voltage unit that distributes the electric power of the high-voltage battery 14 to high-voltage devices of the electric vehicle 10 including the inverter 15B. The on-board charging unit 21 is a high-voltage unit that charges the high-voltage battery 14. The on-board charging unit 21 includes a charging circuit for performing charging and a step-down circuit that reduces the high-voltage electric power from the high-voltage system and supplies the low-voltage system with the reduced-voltage electric power. The power distribution unit 20 and the on-board charging unit 21 are electrically connected to the electric drive unit 15 by cables 23 and 24, respectively. The cable 23 connecting the power distribution unit 20 and the electric drive unit 15 has a larger diameter than the cable 24 connecting the on-board charging unit 21 and the electric drive unit 15. The coolant module 18 distributes coolant to the power distribution unit 20 and the on-board charging unit 21.

A high-voltage heater 22 is also installed in the front compartment 13. The high-voltage heater 22 uses the electric power of the high-voltage battery 14 to heat the coolant. The high-voltage heater 22 is configured to heat the coolant passing through the condenser 19A of the refrigerant module 19. The coolant heated by the high-voltage heater 22 is used, for example, to warm the passenger compartment and heat the high-voltage battery 14.

In the electric vehicle 10, the coolant module 18 and the refrigerant module 19 are located in front of the electric drive unit 15. Further, the coolant module 18 and the refrigerant module 19 are arranged next to one another in the vertical direction so that the refrigerant module 19 is located above the coolant module 18. The low-voltage battery 16 is located toward the left of the coolant module 18 and the refrigerant module 19.

The power distribution unit 20 and the on-board charging unit 21 are stacked one above the other and arranged above the electric drive unit 15. The power distribution unit 20, which is connected to the electric drive unit 15 by the large-diameter cable 23, is located at a lower position than the on-board charging unit 21, which is connected to the electric drive unit 15 by the small-diameter cable 24. Further, in the electric vehicle 10, the high-voltage heater 22 is located above the power distribution unit 20 and the on-board charging unit 21, which are located above the electric drive unit 15.

### Operation of Embodiment

In the electric vehicle 10, the electric drive unit 15 is installed inside the front compartment 13. The thermal modules (coolant module 18 and refrigerant module 19) and the high-voltage units (power distribution unit 20 and on-board charging unit 21) are installed around the electric drive unit 15.

The section in the front compartment 13 rearward from the electric drive unit 15 is difficult to access when the hood 13A is open. Further, the opposite sides of the electric drive unit 15 inside the front compartment 13 in the lateral direction of the vehicle is where the suspension devices of the front wheels 11 are installed. This limits the space at the opposite sides of the electric drive unit 15 for the arrangement of other members. Consequently, in order to facilitate assembly during manufacture of the electric vehicle 10 and to enable smooth inspection and maintenance, it is preferable that the thermal modules and the high-voltage units be arranged in front of or above the electric drive unit 15. Of these two locations, the section in front of the electric drive unit 15 is more exposed to airflow and allows heat to be dissipated more effectively.

An increase in the temperature of the thermal modules increases the temperature of coolant and the temperature of the refrigerant that are distributed to different components. Thus, in the electric vehicle 10, the thermal modules are located in front of the electric drive unit 15, which is exposed to airflow. The high-voltage units are arranged above the electric drive unit 15.

The two high-voltage units, that is, the power distribution unit 20 and the on-board charging unit 21, are stacked one above the other and arranged above the electric drive unit 15. The two high-voltage units are electrically connected to the electric drive unit 15 by the cables 23 and 24, respectively. The cable 23 connecting the power distribution unit 20 and the electric drive unit 15 has a larger diameter than the cable 24 connecting the on-board charging unit 21 and the electric drive unit 15. The power distribution unit 20 is located closer to the electric drive unit 15 than the on-board charging unit 21 is. Thus, the cable 23 connecting the power distribution unit 20 and the electric drive unit 15 is shorter than the cable 24 connecting the on-board charging unit 21 and the electric drive unit 15. If the power distribution unit 20 were to be arranged above the on-board charging unit 21, the large-diameter cable 23 would be longer than the small-diameter cable 24. Accordingly, the total weight of the cables 23 and 24 is smaller when the power distribution unit 20 is arranged below the on-board charging unit 21 as in the present embodiment than when the on-board charging unit 21 is arranged below the power distribution unit 20.

### Advantages of Embodiment

The electric vehicle 10 has the advantages described below.
(1) The two high-voltage units of the power distribution unit 20 and the on-board charging unit 21, which are electrically connected to the electric drive unit 15 by the cables 23 and 24, are stacked one above the other and arranged above the electric drive unit 15. Further, the power distribution unit 20, which is connected by the large-diameter cable 23 to the electric drive unit 15, is located at a lower position than the on-board charging unit 21, which is connected by the small-diameter cable 24 to the electric drive unit 15. This layout allows the large-diameter cable 23 to be shorter than the small-diameter cable 24. Thus, the total weight of the cables 23 and 24 is relatively low.
(2) In general, cables with larger diameters are more difficult to route. In this respect, in the present embodiment, the power distribution unit 20, to which the large-diameter cable 23 is connected, is located immediately above the electric drive unit 15. Thus, the cable 23 is readily routed even though it has a larger diameter than the cable 24 and is relatively difficult to route.
(3) The thermal modules are located in front of the electric drive unit 15. More specifically, the thermal modules, which are the coolant module 18 for distributing coolant and the refrigerant module 19 for distributing air conditioning refrigerant, are located in front of the electric drive unit 15. The section in front of the electric drive unit 15 is more exposed to airflow than the section above the electric drive unit 15. In this respect, in the present embodiment, the thermal modules are located in front of the electric drive unit 15. Thus, the cooling efficiency of the thermal modules is improved by the airflow.
(4) The refrigerant module 19 includes the water-cooled condenser 19A configured to cool refrigerant by exchanging heat with the coolant distributed by the coolant module 18. The refrigerant module 19 is located above the coolant module 18. When the electric vehicle 10 is traveling, air flows in the front compartment 13 through the upper section of the front compartment 13. In this respect, in the present embodiment, the refrigerant module 19 is located in front of the electric drive unit 15 at a location more exposed to airflow than the coolant module 18. This increases the coolant cooling efficiency of the condenser 19A.
(5) The high-voltage heater 22, which electrically heats the coolant, is located above the power distribution unit 20 and the on-board charging unit 21, which are located above the electric drive unit 15. For example, the high-voltage heater 22, which is arranged in the coolant circuit that circulates coolant, may be integrated with the coolant module 18. However, this would enlarge the coolant module 18, in which case the space in front of the electric drive unit 15 may become insufficient. In this respect, in the present embodiment, the high-voltage heater 22 is separated from the coolant module 18 and arranged at a different location. This improves the overall layout efficiency.

Further, if the coolant module 18 were to include a section where high-temperature coolant heated by the high-voltage heater 22 flows and a section where low-temperature coolant flows, the two sections would have to be thermally insulated from each other. In this respect, in the present embodiment, the high-voltage heater 22 is separated from the coolant module 18. This simplifies the coolant module 18.

### Other Embodiments

The above embodiments may be modified as described below. The above embodiments and the modified examples described below may be combined as long as there is no technical contradiction.

### The High-Voltage Heater 22

The high-voltage heater 22 may be arranged at a location that differs from that in the above embodiment. For example, the high-voltage heater 22 may be installed in front of, behind, or beside the electric drive unit 15. Further, the high-voltage heater 22 may be installed outside the front compartment 13.

The coolant module 18 may be integrated with the high-voltage heater 22.

The electric vehicle 10 does not have to include the high-voltage heater 22.

### Structure of Thermal Modules

The coolant module 18 and the refrigerant module 19 may be installed inside the front compartment 13 at a section other than the section in front of the electric drive unit 15.

The specific structures of the coolant module 18 and the refrigerant module 19 may be changed as long as they have the functionalities for distributing coolant and refrigerant.

The coolant module 18 and the refrigerant module 19 may be integrated into a single thermal module.

### Structure of High-Voltage Units

The high-voltage units arranged above the electric drive unit 15 may be of any number and type. For example, the inverter 15B may be separate from the electric drive unit 15, and the inverter 15B may be arranged above the electric drive unit 15 as one of the high-voltage units. The high-voltage units arranged above the electric drive unit 15 may include a high-voltage unit that is not connected to the electric drive unit 15 by a cable. In this case, as long as the electric vehicle 10 satisfies following requirements (A) and (B), advantages (1) and (2) will be obtained. Requirement (A) requires two or more high-voltage units to be located above the electric drive unit 15, in which the high-voltage units are electrically connected by cables of different diameters to the electric drive unit 15. Requirement (B) requires two or more high-voltage units to be stacked one above another so that units connected to the electric drive unit 15 by cables having larger diameters are located at lower positions.

### Others

The electric drive unit 15 may have any structure as long as it includes the motor 15A, which generates driving force for propelling the electric vehicle 10 from electric power supplied by the high-voltage battery 14. For example, the electric drive unit 15 may be separate from the inverter 15B or be separate from the gears of the speed reduction mechanism and the differential mechanism.

The high-voltage battery 14, the low-voltage battery 16, and the radiator 17 may be located at positions that differ from the above embodiment.

The electric vehicle 10 may be of a four-wheel drive type that drives the rear wheels 12 with an electric drive unit, which differs from the electric drive unit 15 installed inside the front compartment 13, or with an engine.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuit are combined differently, and/or replaced or supplemented by other components or their equivalents. The scope of the disclosure is not defined by the detailed description, but by the claims and their equivalents. All variations within the scope of the claims and their equivalents are included in the disclosure.

## Claims

1. An electric vehicle (10), comprising:
a high-voltage battery (14);
an electric drive unit (15) configured to generate driving force for propelling the electric vehicle (10) from electric power supplied by the high-voltage battery (14);
high-voltage units (20, 21) electrically connected to the electric drive unit (15); and
a thermal module (18, 19) configured to distribute a heat-carrying medium, wherein
the electric drive unit (15), the high-voltage units (20, 21), and the thermal module (18, 19) are installed inside a front compartment (13) that is located in a front part of the electric vehicle (10), and
the high-voltage units (20, 21) are stacked one above another and arranged above the electric drive unit (15) so that a high-voltage unit (20) connected to the electric drive unit (15) by a cable (23) having a larger diameter is located at a lower position than a high-voltage unit (21) connected to the electric drive unit (15) by a cable (24) having a smaller diameter.

2. The electric vehicle (10) according to claim 1, wherein:
the thermal module (18, 19) includes a refrigerant module (19) configured to distribute a refrigerant for air-conditioning and a coolant module (18) configured to distribute a coolant; and
the refrigerant module (19) and the coolant module (18) are installed in front of the electric drive unit.

3. The electric vehicle (10) according to claim 2, wherein the refrigerant module (19) is located above the coolant module (18) and includes a water-cooled condenser (19A) configured to cool the refrigerant by exchanging heat with the coolant distributed by the coolant module (18).

4. The electric vehicle (10) according to any one of claims 1 to 3, further comprising a high-voltage heater (22) located above the high-voltage units (20, 21) to electrically heat the coolant.

5. The electric vehicle (10) according to claim 1, wherein the high-voltage units (20, 21) include:
a power distribution unit (20) configured to distribute electric power from the high-voltage battery; and
an on-board charging unit (21) configured to charge the high-voltage battery.
